# FASCICULE DE BREVET EUROPEEN

(11) **EP 2 892 720 B1**
(45) Date de publication et mention de la délivrance du brevet: **01.04.2020**
(21) Numéro de dépôt: 13767042.8
(22) Date de dépôt: 10.09.2013
(51) Int. Cl.: B32B 17/10

(54) **VITRAGE DÉCORATIF A COUCHE RÉFLÉCHISSANTE DÉPOSÉE SUR UN SUBSTRAT TEXTURE**
DEKORVERGLASUNG MIT REFLEKTIERENDER SCHICHT AUF EINEM TEXTURIERTEN SUBSTRAT
DECORATIVE GLAZING WITH REFLECTING LAYER DEPOSITED ON TEXTURED SUBSTRATE

(30) Priorité: 10.09.2012 FR 1258459
(43) Date de publication de la demande: 15.07.2015
(73) Titulaire: Saint-Gobain Glass France, 92400 Courbevoie (FR)
(72) Inventeur: GUILLEMOT, François, F-75019 Paris (FR); CHEMIN, Nicolas, F-92220 Bagneux (FR)
(74) Mandataire: Saint-Gobain Recherche
(86) Numéro de dépôt international: PCT/FR2013/052071
(87) Numéro de publication internationale: WO 2014/037679

(56) Documents cités:
- WO-A1-2007/060353
- DE-A1-102010 004 741
- FR-A- 1 604 536
- US-A- 1 604 459
- US-A- 4 343 848
- US-A- 5 294 494
- US-A- 5 393 365
- US-A1- 2007 098 964

## Description

La présente invention concerne un vitrage décoratif dont une partie au moins de la surface est texturée et directement revêtue d'une couche réfléchissante.

L'objet de l'invention est de mettre à disposition des éléments décorés d'aménagement intérieur-extérieur présentant une première face (avant) extérieure lisse et aisément nettoyable, mais à faible rayabilité (feuille de verre ou équivalent), et une seconde face (arrière) présentant une texture de géométrie choisie et munie d'un revêtement réfléchissant, qui produisent un aspect décoratif visible du côté de la première face de ces éléments d'aménagement. Il peut s'agir de feuilles ou carreaux de verre, matière plastique ou d'une plaque vitrocéramique claire ouvragés, utilisables dans l'aménagement intérieur et extérieur (crédence de cuisine, meuble...), l'électroménager...

Jusqu'à maintenant, les couples texture/couche réfléchissante sont limités par les échelles et les formes de textures aisément disponibles, c'est-à-dire par le procédé de texturation. Pour celles obtenues par lamination à chaud, les échelles sont supérieures à quelques centaines de micron, et pour le verre satiné, la forme et l'échelle des textures (150 µm de période) sont fixées par le mécanisme d'attaque chimique du verre (par exemple, 10 µm de haut selon la durée d'attaque).

WO2011085995 divulgue un composite comprenant un substrat transparent et une couche sol-gel transparente texturée permettant d'obtenir un profil de surface qui peut avoir une texture semblable à celle du métal brossé, revêtue d'une couche contenant du métal qui permet d'obtenir un aspect métallique.

Les inventeurs se sont donné pour but la réalisation de composites en feuilles dont les surfaces peuvent être de dimensions relativement importantes, non limitées, de l'ordre du mètre carré et plus, dont une surface extérieure est constituée d'une feuille de verre ou équivalent, et dont l'aspect est donné par une texture de 10 nm à 100 µm parfaitement contrôlable sur une partie au moins de la surface des composites, et recouverte d'une couche réfléchissante. Quand celle-ci est une métallisation, la texture contrôlable, et également reproductible, permet de donner au vitrage un aspect aussi complexe que ceux de l'inox ou de l'aluminium brossé, ou bouchonné. Ainsi réalise-t-on des tables ou autres meubles, des carreaux de revêtement mural, ... à effets décoratifs.

Ce but a été atteint par l'invention qui a, en conséquence, pour objet, un composite comprenant successivement :
- un substrat transparent,
- une couche transparente ayant une matrice polymère thermoplastique de poly(méthacrylate de méthyle), polystyrène, polycarbonate, poly(chlorure de vinyle), polyamide, polyéthylène, polypropylène, seuls ou en mélanges ou copolymères de plusieurs d'entre eux, dont une partie au moins de la surface est texturée, de dimensions caractéristiques des texturations comprises entre 10 nm et 100 µm, et revêtue d'une couche réfléchissante qui comprend un métal et/ou un oxyde à haut indice et/ou une peinture, et qui est recouverte d'une couche de protection opaque qui consiste en une peinture organique et/ou minérale.

L'invention exploite ainsi les techniques les plus récentes de formation d'une texturation sur une couche déformable, dont il sera question plus en détail dans la suite, et qui permettent de former des motifs en relief de formes parfaitement définies et dimensions aussi petites que 10 nm et plus. La surface texturée de la couche transparente est ainsi, à volonté, ordonnée ou non, ou bien la duplication parfaite de n'importe quelle « surface mère », de quelque matériau que ce soit. En regardant du côté du substrat transparent opposé à ladite couche transparente, on observe ainsi l'apparence d'une surface de ce matériau, ou tout effet décoratif recherché.

Selon d'autres caractéristiques préférées du composite de l'invention :
- les dimensions caractéristiques des texturations sont au plus égales à 30 µm, et,
- par ordre de préférence croissant, au moins égales à 50, 100 et 500 nm ; l'inox et l'aluminium brossé, ou bouchonné, peuvent par exemple être décrits par des motifs de 1 à 2 µm de profondeur et 10 à 20 µm de pas ;
- le substrat transparent est choisi parmi un matériau verrier (verre sodocalcique, flotté, éventuellement trempé, borosilicate...), une vitrocéramique notamment claire et un matériau polymère (transparent) tel que polycarbonate, poly(méth)acrylate de méthyle, polystyrène, poly(chlorure de vinyle), polyamide, polyéthylène, polypropylène, seuls ou en mélanges ou copolymères de plusieurs d'entre eux, résine ionomère... ; quand il s'agit d'un matériau polymère, il peut être muni sur sa face opposée à ladite couche transparente, d'un revêtement résistant aux rayures, tel qu'en polysiloxane ou équivalent ;
- la couche réfléchissante
   ∘ est opaque ou
   ∘ transparente ;
   ∘ comprend un métal tel qu'argent, aluminium et/ou un oxyde à haut indice tel que TiO₂, ZrO₂ et/ou une peinture ;
   ∘ a un indice de réfraction réel à la longueur d'onde de 600 nm au moins égal à 1,8 ;
- une partie de la surface de ladite couche transparente n'est pas texturée et revêtue d'une couche réfléchissante ; dans cette variante, la fonction de miroir coexiste ainsi avec la fonction décorative qui est l'objet de l'invention.

Le composite décrit ci-dessus peut être fabriqué selon plusieurs procédés.

Un premier procédé comprend
- le dépôt d'une couche déformable - précurseur de ladite couche transparente dont une partie au moins de la surface est texturée, sur un substrat transparent,
- la mise en contact de cette couche déformable avec la face texturée d'un tampon fille,
- l'introduction dans une poche en matériau non perméable du substrat revêtu et du tampon fille,
- l'introduction de la poche et de son contenu dans une enceinte hermétique,
- l'évacuation de l'air de l'enceinte jusqu'à une pression au plus égale à 0,5 bar,
- le scellage de la poche avant réintroduction de l'air dans l'enceinte,
- l'introduction de la poche scellée et de son contenu dans un autoclave,
- l'application d'une pression comprise entre 0,5 et 8 bar et d'une température comprise entre 25 et 400 °C pendant 15 minutes à plusieurs heures,
- l'ouverture de la poche, puis
- la séparation du substrat et du tampon fille.

La texturation formée selon ce procédé est de dimensions comprises entre 10 nm et 100 µm (profondeur des vallées, hauteur des excroissances, largeur/diamètre des excroissances, largeur des vallées...), voire jusqu'à des valeurs de plusieurs centimètres : « mur » de 10 µm X 10 µm X 4 cm.

La texturation est susceptible d'être formée, par ce procédé, sur des surfaces de l'ordre du mètre carré au moins, jusqu'aux dimensions de la feuille de verre dite Pleine Largeur Float (PLF), c'est-à-dire 3 m X 6m notamment.

Les procédés de dépôt de la couche déformable sur le substrat transparent ne sont pas limités. On emploie un dépôt par voie liquide (enduction laminaire, pulvérisation - spray coating-, trempé -dip coating-, et tournette -spin coating-). Dans une enduction laminaire, les précurseurs liquides de la couche déformable forment, au repos, un ménisque suspendu à une fente de laquelle ils sont extraits par déplacement de cette fente en position transversale au-dessus du substrat.

Le tampon fille est appelé ainsi car il résulte du moulage de son matériau par rapport à un master. Son matériau texturé peut être polymère.

Le matériau de la poche est non perméable à l'air.

L'air de l'enceinte est évacué jusqu'à une pression au plus égale à 0,5 bar ou, par ordre de préférence croissante, à 5 mbar, 2 mbar et 1 mbar. Par exemple, l'air de la chambre est évacué pendant quinze minutes jusqu'à atteindre une pression de l'ordre de 0.5 mbar. La poche est hermétiquement scellée avant de réintroduire l'air dans l'enceinte.

La poche scellée est ensuite placée dans un autoclave qui va permettre d'appliquer une pression comprise entre 0,5 et 8 bar et une température comprise entre 25 et 400°C. Le traitement dans l'autoclave peut être compris entre 15 minutes et plusieurs heures. Ces paramètres doivent être ajustés en fonction de la nature de la couche déformable. L'objectif est ici de venir presser le tampon fille contre la couche initialement déformable, sol-gel ou autre, tout en la réticulant pour la rendre indéformable. De cette façon, on imprime et on fige le motif inscrit en surface du tampon fille dans la couche déposée en surface du substrat. L'étape de scellage et d'évacuation de l'air est nécessaire pour permettre la transmission de la pression du fluide au tampon.

A la sortie de l'autoclave la poche est percée préalablement à son ouverture et le tampon fille est retiré de la surface du substrat. La couche peut alors être soumise à un nouveau traitement thermique pour la densifier, la cristalliser (TiO₂, ZnO) et améliorer ses propriétés mécaniques et/ou pour jouer sur la nature hydrophile/hydrophobe de sa surface.

Ce procédé ne nécessite pas d'appareillage spécifique (un système de mise sous poche et un autoclave). Il est compatible avec les dispositifs couramment utilisés dans l'industrie verrière, notamment pour le feuilletage des pare-brises ou encore pour la fabrication de vitrage technique tel que feuilleté intégrant un film à cristaux liquides, du type commercialisé par la société Saint-Gobain Glass sous la marque enregistrée Privalite®.

Dans la mesure où le procédé ne fait intervenir que des outils déjà développés sur les lignes industrielles, ce procédé apparaît facilement industrialisable et compatible avec le traitement de vitrage de grande taille.

Ce procédé est compatible avec l'utilisation de tampons bas coûts tels que des feuilles polymères texturées (produites par roll-to-roll notamment). Dans la mesure où le tampon n'est pas détruit au cours du procédé, il peut être réutilisé plusieurs fois.

La face texturée du tampon fille est avantageusement perméable à l'air. La mise sous contact lors de l'étape de scellage ne nécessite alors pas de précaution particulière pour éviter le piégeage de bulles d'air entre le substrat revêtu et le tampon. Celui-ci peut être constitué d'un polymère élastomère (type PDMS, EVA, époxy) ou vitreux ou d'un copolymère.

Dans une variante préférée de ce procédé, la face texturée du tampon fille est en matériau polymère ou hybride organique (polymère) - inorganique, et la température dans l'autoclave est successivement portée à une température supérieure, puis inférieure à la température de transition vitreuse de ce matériau polymère, ou inversement ; cette disposition permet de contrôler précisément le comportement mécanique du tampon et d'optimiser le contact entre le tampon et le substrat revêtu ainsi que la qualité de la réplication des structures.

Selon un deuxième procédé, la couche transparente est texturée par la mise en oeuvre d'un élément rotatif, comme décrit dans le document FR 2 893 610 (par exemple, selon un procédé « roll to plate » -cylindre sur substrat plan-).

La formation sur la couche (transparente) texturée de la couche réfléchissante est effectuée de préférence par voie liquide ou pulvérisation cathodique.

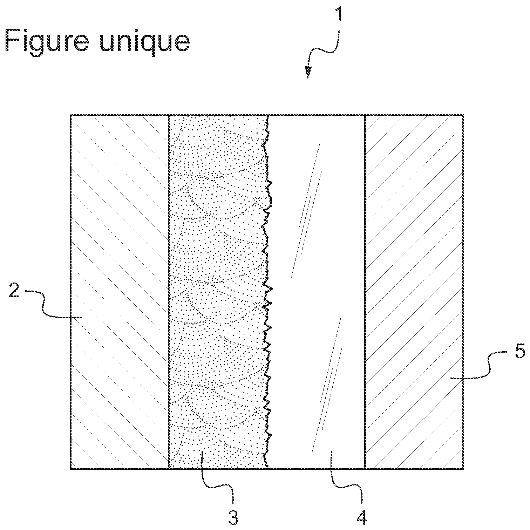

L'invention est illustrée par l'exemple de référence suivant, en référence au dessin unique en annexe.

### Exemple de référence

On décrit la duplication d'une surface d'aluminium bouchonné dans une couche de silice sol-gel. Cette texture est définie par une profondeur de 1-2 µm et un pas de 10-20 µm.

Un sol de silice est préparé à partir d'un mélange méthyltriéthoxysilane (commercialisé par la société Sigma Aldrich)/ Acide Acétique (Prolabo) suivant un rapport massique 45/55. La solution est laissée sous agitation à température ambiante pendant 12 h.

Un tampon PDMS est réalisé par moulage à partir d'une surface d'aluminium bouchonné décrite ci-dessus. Le moulage est réalisé en coulant un mélange 10 :1 des deux composants (élastomère : catalyseur) du SYLGARD® 184 SILICONE ELASTOMER KIT commercialisé par Dow Corning en évacuant les bulles d'air résiduelles sous vide puis en réticulant l'élastomère à 80°C pendant 4h.

Le sol est déposé par spin coating (2000 rpm, 1 min) sur un substrat de verre 2 mm de 10X10 cm², commercialisé par la société Saint-Gobain Glass sous la marque enregistrée Planilux®, dont la surface a été préalablement nettoyée par un polissage Cerox®. La couche est séchée 5 minutes à 50°C.

A la suite du dépôt, la face texturée du tampon PDMS est mise en contact avec la couche de silice sol-gel. De manière à évacuer ces bulles d'air qui risquent de compromettre le contact entre la couche et le masque, les échantillons sont placés dans une poche de scellement et installés dans une enceinte hermétique qui est évacuée jusqu'à atteindre un vide à 0.5 mbar. A l'issue des 20 minutes la poche est scellée par un thermocollage.

Les échantillons sont ensuite placés dans l'autoclave dans lequel ils subissent simultanément une montée en température jusqu'à 110 °C et en pression jusqu'à 1,75 bar (5 min à 20 °C, montée à 60 °C en 5 min, palier à 60 °C pendant 10 min, montée à 110 °C en 5 min, palier à 110 °C pendant 20 min et descente à 35 °C en 15 min ; montée de 0 à 1,75 bar en 5 min, palier à 1,75 bar pendant 40 min, descente à 0 bar en 15 min). A la sortie de l'autoclave les échantillons sont démoulés à froid.

Le transfert du motif dans la couche de silice sol-gel est caractérisé par AFM. Les motifs obtenus sont similaires à ceux portés par le tampon

Par ce procédé, la même duplication peut être effectuée dans une couche thermoplastique, telle que de poly(méthacrylate de méthyle), une couche hybride thermoplastique-minérale telle que de poly(méthacrylate de méthyle)-SiO₂.

On dépose deux types de couches réfléchissantes sur des échantillons de verre munis de leur couche de silice texturée ainsi constitués.

Un premier type de couche réfléchissante est une couche d'argent déposée selon le mode opératoire suivant :
- protection de la face non texturée avec un film adhésif antiacide ;
- dilution des solutions d'argenture (solutions à diluer fournies par la société DR.-ING. SCHMITT, GMBH Dieselstr. 16, 64807 Dieburg / GERMANY) selon :
   - 42 µl de Miraflex® 1200 dans une fiole de 250 cm³ (sol n°1)
   - 125 µl de Miraflex® PD dans une fiole de 250 cm³ (sol n°2)
   - 6 ml de Miraflex® RV dans une fiole de 250 cm³ (sol n°3)
   - 6 ml de Miraflex® S dans une fiole de 250 cm³ (sol n°4)
- placement d'un substrat en verre dans un bac dans lequel on verse le contenu de la solution n°1 (directement sur le verre) (contient des ions Sn2+ et Sn4+) ;
- agitation pendant 1min puis rinçage à l'eau distillée ;
- placement du substrat verrier dans un deuxième bac dans lequel on verse le contenu de la solution n°2 (directement sur le verre) (contient des ions Pd2+) ;
- agitation pendant 1min puis rinçage à l'eau distillée ;
- placement du substrat verrier dans un dernier bac dans lequel on verse (après déclenchement du chronomètre) le contenu des solutions n°3 et 4 (pas directement sur le verre)(contient du nitrate d'argent et un réducteur).
- agitation pendant 30 secondes puis rinçage à l'eau distillée ;
- placement du substrat verrier dans le premier bac et agitation pendant 1 min ;
- rinçage à l'eau distillée.

La couche d'argent ainsi produite a une épaisseur approximative de 80 nm.

Un second type de couche réfléchissante est une couche TiO₂ déposée, comme la couche d'argent, sur la surface texturée de silice, par pulvérisation cathodique assistée par magnétron, avec une cible TiO₂, un mélange de gaz Ar/(Ar + O₂) à 30 % et une pression de dépôt de 2.10⁻³ mbar.

La couche d'argent ou de TiO₂ est ensuite couverte d'une couche d'environ 50 µm d'épaisseur de peinture du type alkyde de marque Fenzi, appliquée par pulvérisation suivi d'une cuisson pendant 15 minutes à 180°C.

En référence à la figure unique annexée, on a ainsi obtenu un composite 1 constituée, successivement, de la feuille de verre 2, la couche de silice texturée 3, la couche réfléchissante 4 et la couche protectrice 5. Du côté de la face libre de la feuille de verre 2, on observe la texture d'aluminium bouchonné du couple couche de silice texturée 3 - couche réfléchissante 4.

## Revendications

1. Composite (1) comprenant successivement
- un substrat transparent (2),
- une couche (3) transparente ayant une matrice polymère thermoplastique de poly(méthacrylate de méthyle), polystyrène, polycarbonate, poly(chlorure de vinyle), polyamide, polyéthylène, polypropylène, seuls ou en mélanges ou copolymères de plusieurs d'entre eux, dont une partie au moins de la surface est texturée, de dimensions caractéristiques des texturations comprises entre 10 nm et 100 µm, et revêtue d'une couche réfléchissante (4) qui comprend un métal et/ou un oxyde à haut indice et/ou une peinture, et qui est recouverte d'une couche de protection (5) opaque qui consiste en une peinture organique et/ou minérale.

2. Composite (1) selon la revendication 1, **caractérisé en ce que** les dimensions caractéristiques des texturations sont au plus égales à 30 µm.

3. Composite (1) selon l'une des revendications 1 ou 2, **caractérisé en ce que** les dimensions caractéristiques des texturations sont au moins égales à 50 nm.

4. Composite (1) selon l'une des revendications précédentes, **caractérisé en ce que** les dimensions caractéristiques des texturations sont au moins égales à 100 nm.

5. Composite (1) selon l'une des revendications précédentes, **caractérisé en ce que** les dimensions caractéristiques des texturations sont au moins égales à 500 nm.

6. Composite (1) selon l'une des revendications précédentes, **caractérisé en ce que** le substrat transparent (2) est choisi parmi un matériau verrier, une vitrocéramique et un matériau polymère.

7. Composite (1) selon l'une des revendications précédentes, **caractérisé en ce que** la couche réfléchissante (4) est opaque.

8. Composite (1) selon l'une des revendications 1 à 6, **caractérisé en ce que** la couche réfléchissante (4) est transparente.

9. Composite (1) selon l'une des revendications précédentes, **caractérisé en ce que** la couche réfléchissante (4) comprend un métal choisi parmi l'argent, l'aluminium et/ou un oxyde à haut indice choisi parmi TiO₂, ZrO₂ et/ou une peinture.

10. Composite (1) selon l'une des revendications précédentes, **caractérisé en ce que** la couche réfléchissante (4) a un indice de réfraction réel à la longueur d'onde de 600 nm au moins égal à 1,8.

11. Composite (1) selon l'une des revendications précédentes, **caractérisé en ce qu'**une partie de la surface de ladite couche (3) transparente n'est pas texturée et revêtue d'une couche réfléchissante (4).

## Patentansprüche

1. Verbundelement (1), das nacheinander Folgendes umfasst
- ein durchsichtiges Substrat (2),
- eine durchsichtige Schicht (3) mit einer thermoplastischen Polymermatrix aus Polymethylmethacrylat, Polystyrol, Polycarbonat, Polyvinylchlorid, Polyamid, Polyethylen, Polypropylen, allein oder in Mischungen oder Copolymeren aus mehreren davon, wobei zumindest ein Abschnitt der Oberfläche derselben texturiert ist, wobei die charakteristischen Abmessungen der Textureinheiten im Bereich von 10 nm bis 100 µm liegen, und sie mit einer reflektierenden Schicht (4) überzogen ist, welche ein Metall und/oder ein Oxid mit hohem Indexwert und/oder einen Anstrich umfasst und welche mit einer undurchsichtigen Schutzschicht (5) bedeckt ist, die aus einem organischen und/oder mineralischen Anstrichmittel besteht.

2. Verbundelement (1) nach Anspruch 1, **dadurch gekennzeichnet, dass** die charakteristischen Abmessungen der Textureinheiten höchstens 30 µm betragen.

3. Verbundelement (1) nach einem der Ansprüche 1 oder 2, **dadurch gekennzeichnet, dass** die charakteristischen Abmessungen der Textureinheiten mindestens 50 nm betragen.

4. Verbundelement (1) nach einem der vorhergehenden Ansprüche, **dadurch gekennzeichnet, dass** die charakteristischen Abmessungen der Textureinheiten mindestens 100 nm betragen.

5. Verbundelement (1) nach einem der vorhergehenden Ansprüche, **dadurch gekennzeichnet, dass** die charakteristischen Abmessungen der Textureinheiten mindestens 500 nm betragen.

6. Verbundelement (1) nach einem der vorhergehenden Ansprüche, **dadurch gekennzeichnet, dass** das durchsichtige Substrat (2) aus einem Glaswerkstoff, einer Glaskeramik und einem Polymerwerkstoff ausgewählt ist.

7. Verbundelement (1) nach einem der vorhergehenden Ansprüche, **dadurch gekennzeichnet, dass** die reflektierende Schicht (4) undurchsichtig ist.

8. Verbundelement (1) nach einem der Ansprüche 1 bis 6, **dadurch gekennzeichnet, dass** die reflektierende Schicht (4) durchsichtig ist.

9. Verbundelement (1) nach einem der vorhergehenden Ansprüche, **dadurch gekennzeichnet, dass** die reflektierende Schicht (4) ein Metall, welches aus Silber, Aluminium ausgewählt ist, und/oder ein Oxid mit hohem Indexwert, welches aus TiO₂, ZrO₂ ausgewählt ist, und/oder ein Anstrichmittel umfasst.

10. Verbundelement (1) nach einem der vorhergehenden Ansprüche, **dadurch gekennzeichnet, dass** die reflektierende Schicht (4) bei einer Wellenlänge von 600 nm einen tatsächlichen Brechungsindex von mindestens 1,8 hat.

11. Verbundelement (1) nach einem beliebigen der vorhergehenden Ansprüche, **dadurch gekennzeichnet, dass** ein Abschnitt der Oberfläche der durchsichtigen Schicht (3) nicht texturiert und mit einer reflektierenden Schicht (4) überzogen ist.

## Claims

1. Composite (1) successively comprising:
- a transparent substrate (2),
- a transparent layer (3) having a thermoplastic polymer matrix of poly(methyl methacrylate), polystyrene, polycarbonate, poly(vinyl chloride), polyamide, polyethylene or polypropylene, alone or as mixtures or copolymers of several of them, a portion at least of the surface which is textured, with characteristic dimensions of the texturing forms of between 10 nm and 100 µm, and coated with a reflective layer (4) which comprises a metal and/or an oxide having a high index and/or a paint, and which is covered with an opaque protective layer (5) which consists of an organic and/or inorganic paint.

2. Composite (1) according to Claim 1, **characterized in that** the characteristic dimensions of the texturing forms are at most equal to 30 µm.

3. Composite (1) according to either of Claims 1 and 2, **characterized in that** the characteristic dimensions of the texturing forms are at least equal to 50 nm.

4. Composite (1) according to one of the preceding claims, **characterized in that** the characteristic dimensions of the texturing forms are at least equal to 100 nm.

5. Composite (1) according to one of the preceding claims, **characterized in that** the characteristic dimensions of the texturing forms are at least equal to 500 nm.

6. Composite (1) according to one of the preceding claims, **characterized in that** the transparent substrate (2) is chosen from a glass material, a glass-ceramic and a polymer material.

7. Composite (1) according to one of the preceding claims, **characterized in that** the reflective layer (4) is opaque.

8. Composite (1) according to one of Claims 1 to 6, **characterized in that** the reflective layer (4) is transparent.

9. Composite (1) according to one of the preceding claims, **characterized in that** the reflective layer (4) comprises a metal, such as silver or aluminum, and/or an oxide having a high index, such as TiO₂ or ZrO₂, and/or a paint.

10. Composite (1) according to one of the preceding claims, **characterized in that** the reflective layer (4) has a real refractive index at the wavelength of 600 nm at least equal to 1.8.

11. Composite (1) according to one of the preceding claims, **characterized in that** a portion of the surface of said transparent layer (3) is not textured and coated with a reflective layer (4).
